# EUROPÄISCHE PATENTSCHRIFT

(11) **EP 2 215 433 B1**
(45) Veröffentlichungstag und Bekanntmachung des Hinweises auf die Patenterteilung: **07.06.2017**
(21) Anmeldenummer: 08851621.6
(22) Anmeldetag: 20.10.2008
(51) Int. Cl.: G01F 1/684, G01F 15/00

(54) **SENSORANORDNUNG ZUR BESTIMMUNG EINES PARAMETERS EINES FLUIDEN MEDIUMS**
SENSOR ARRANGEMENT FOR DETERMINING A PARAMETER OF A FLUID MEDIUM
SYSTÈME DE CAPTEUR POUR DÉFINIR UN PARAMÈTRE D'UN MILIEU FLUIDE

(30) Priorität: 19.11.2007 DE 102007055193
(43) Veröffentlichungstag der Anmeldung: 11.08.2010
(73) Patentinhaber: Robert Bosch GmbH, 70442 Stuttgart (DE)
(72) Erfinder: RENNINGER, Erhard, 71706 Markgroeningen (DE); GMELIN, Christoph, 70597 Stuttgart (DE); WESTENBERGER, Lutz, 71686 Remseck (DE)
(86) Internationale Anmeldenummer: PCT/EP2008/064090
(87) Internationale Veröffentlichungsnummer: WO 2009/065680

(56) Entgegenhaltungen:
- EP-A- 1 867 961
- DE-A1- 19 647 081
- DE-A1- 19 705 660
- DE-A1- 19 942 502
- US-A1- 2004 055 570

## Beschreibung

### Stand der Technik

Die Erfindung geht aus von Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müssen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom, Volumenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Verbrennungskraftmaschinen von Kraftfahrzeugen, insbesondere mit anschließender katalytischer Abgasreinigung, bei denen geregelt eine bestimmte Luftmasse pro Zeiteinheit (Luftmassenstrom) zugeführt werden muss. Zur Messung des Luftmassendurchsatzes werden dabei verschiedene Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluft-massenmessern wird üblicherweise ein Sensorchip eingesetzt, welcher eine dünne Sensormembran aufweist, beispielsweise ein Silicium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt. Die vorliegende Erfindung ist zudem nicht auf den beschriebenen Sensortyp des Heißfilmluftmassenmessers beschränkt, sondern kann grundsätzlich für die meisten Arten von Sensoren, die als fest installierte Sensoren oder als Steckfühler in einem strömenden Medium eingesetzt werden, genutzt werden.

Nachteilig an den aus dem Stand der Technik beschriebenen Steckfühlerkonstruktionen ist jedoch, dass die beschriebenen Steckfühler mit ihrer aerodynamisch ungünstigen Gestalt in vielen Fällen im Ansaugtrakt Probleme bezüglich eines Strömungswiderstand-bedingten Druckabfalls verursachen. Dies bedeutet insbesondere, dass die Signalreproduzierbarkeit der Signale derartiger Sensoren nicht optimal ist. Viele Sensoren, insbesondere Heißfilmluftmassenmesser, werden in der Praxis mit einem Gitter oder einer Gitterkombination ausgerüstet. Diese Gitter können beispielsweise in ein Strömungsrohr integriert werden und stehen üblicherweise einige Zentimeter stromauf des Steckfühlers bzw. Sensors in der Strömung und haben die Aufgabe, das Geschwindigkeitsprofil in dem Strömungsrohr zu vergleichmäßigen. Weiterhin haben derartige Gitter die Aufgabe, evtl. vorhandenen Drall aus der Strömung zu nehmen. Die ausgleichende Wirkung des Gitters wird durch seine bremsende Wirkung auf die Strömung erzielt. Gleichzeitig wird eine Turbulenz erzeugt, die schnelles und langsames Fluid vermischt und so zu einem Geschwindigkeitsausgleich über den gesamten Rohrquerschnitt beiträgt. So wird erreicht, dass die Kennlinie des Sensors (zum Beispiel ein Zusammenhang zwischen Luftmasse und Ausgangsfrequenz oder Ausgangsspannung) nahezu unabhängig vom Geschwindigkeitsprofil der zuströmenden Luft ist.

Ein Beispiel einer derartigen Vorrichtung mit einem Gitter ist aus DE 196 47 081 A1 bekannt. Im Gegensatz zu bekannten Gittern, bei denen gleichgroße, äquidistante Strömungsöffnungen vorgesehen sind, wird bei diesem Gitter vorgeschlagen, Strömungsöffnungen mit unterschiedlichem Durchströmquerschnitt vorzusehen. Die Durchströmquerschnitte sind dabei der Zuströmung angepasst, um stromabwärts des Gitters eine Strömung mit im Wesentlichen gleichmäßiger Geschwindigkeitsverteilung zu bewirken.

US 2004/0055570 A1 bezieht sich auf eine Durchflussregelvorrichtung, die einen Luftfilter zum Entfernen von Fremdkörpern sowie einen Luftkanal zur Definition einer Luftpassage und einen Sensor aufweist. Ein Durchflussregler ist stromab vom Luftfilter und stromauf des Sensors angeordnet, wobei dieser eine äußere und eine innere Oberfläche aufweist. Der Durchflussregler definiert mit seiner inneren Oberfläche einen Luftdurchgang, wobei verhindert wird, dass turbulenter Luftstrom nahe der Wand in den Einlass des Sensors gelangt. Der Durchflussregler ist als ein sich längs erstreckender Körper ausgeführt mit einem konischen Eintrittsbereich, mit einer Neigung in Bezug auf die Richtung des Luftstroms von 0° bis 10° und einem zylindrisch ausgebildeten Austrittsbereich. Der zylindrische Austrittsbereich kann am Luftauslass eine gitterähnliche Struktur aufweisen, welche den Luftstrom konditioniert, bevor dieser in den Sensor gelangt. Der zylindrische Bereich weist an seiner äußeren Oberfläche mindestens eine sich radial von der Oberfläche aus erstreckende Rippe auf, um den Durchflussregler am Sensorgehäuse zu befestigen.

DE 197 05 660 A1 offenbart einen Messeinsatz für Gaszähler, wobei stromauf vor dem Messeinsatz ein Gleichrichterelement angeordnet ist. Das Gleichrichterelement weist Öffnungen auf, durch welche die eintretende Rohrströmung segmentiert wird. Das Gleichrichterelement kann als Gitter ausgebildet sein oder eine Vielzahl von zur Strömungsrichtung parallelen Kanälen aufweisen. Das Gleichrichterelement umfasst radial oder axial ausgerichtete Trennwände, wobei die Ausdehnung der Trennwände in Strömungsrichtung relativ gering ist, so dass kurze Kanäle entstehen.

DE 199 42 502 A1 bezieht sich auf eine Vorrichtung zur Messung von zumindest einem Parameter eines in einer Leitung strömenden Mediums, wobei zur Reduzierung einer Beaufschlagung des Messelements mit Flüssigkeit ein Schutzgitter stromabwärts angeordnet ist. Das Schutzgitter bewirkt eine Umlenkung der Medienströmung, so dass die enthaltenen Flüssigkeitspartikel abgelenkt und Wirbel reduziert werden. Das Schutzgitter ist als Turbolator mit rotationssymmetrisch verdrehten Schaufeln ausgebildet, so dass der Strömung ein Drall aufgezwungen wird. Das Schutzgitter kann Bereiche aufweisen, die das strömende Medium in unterschiedliche Richtung, beispielsweise an die Innenwände der Leitung, umlenken.

EP 1 867 961 A1 bezieht sich auf eine Durchflussmesseinrichtung. Ein Gitter ist in einem Strömungsquerschnitt angeordnet, welches Teil einer Durchflussmesseinrichtung ist. Das Gitter umfasst einen ersten Gitterabschnitt und einen zweiten Gitterabschnitt. Der zweite Gitterabschnitt ist in Bezug auf den ersten Gitterabschnitt derart gefertigt, dass der zweite Gitterabschnitt leichter deformierbar ist als der erste Gitterabschnitt.

Bei vielen Sensoren in Kombination mit herkömmlichen Gittern, wie beispielsweise Luftmassenmessern mit herkömmlichen Kunststoffgittern mit einer Maschenweite von 4 bis 7 mm und
einer Maschentiefe von 5 bis 10 mm ist jedoch in manchen Luftmassenbereichen eine vergleichsweise unbefriedigende Reproduzierbarkeit der Kennlinien zu erwarten. Eine Ursache ist möglicherweise ein unkontrollierter Strömungsumschlag, das heißt ein Übergang von einer laminaren hin zu einer turbulenten Strömung, innerhalb der Rohrwandgrenzschicht. Die Wandgrenzschicht wird in der Regel durch ein Gitter, wie es in den meisten Sensoren eingesetzt wird, nicht ausreichend turbulent gemacht, da diese Gitter in der Regel aus fertigungstechnischen Gründen in Wandnähe größere Maschenweiten aufweisen als in der Rohrmitte. Auch die aus DE 196 47 081 A1 bekannte Gitterkonstruktion mit einer verengten Maschenweite im Randbereich bietet Raum für weitere Verbesserungen, insbesondere Verbesserungen der Reproduzierbarkeit der Kennlinien.

### Offenbarung der Erfindung

Es wird daher eine Sensoranordnung zur Bestimmung wenigstens eines Parameters eines mit einer Hauptströmungsrichtung strömenden fluiden Mediums, insbesondere einer durch ein Strömungsrohr strömenden Ansaugluftmasse einer Brennkraftmaschine, vorgeschlagen. Weiterhin wird ein Strömungsrohrsegment für den Einsatz in einer derartigen Sensoranordnung vorgeschlagen. Die Sensoranordnung und das Strömungsrohrsegment sind derart eingerichtet, dass diese die oben genannten Nachteile bekannter Sensoranordnungen bzw. Strömungsrohrsegmente zumindest weitgehend vermeiden.

Die Sensoranordnung kann eingerichtet sein, um einen oder mehrere physikalische und/oder chemische Parameter des fluiden Mediums zu bestimmen. Beispielsweise können dies die eingangs genannten Parameter sein. Auch andere Parameter sind jedoch messbar. Die Sensoranordnung weist mindestens einen in dem fluiden Medium angeordneten Sensor auf, der diesen Parameter messen kann. Ohne Beschränkung möglicher weiterer Ausgestaltung der Erfindung sei im Folgenden angenommen, dass der Sensor einen Heißfilmluftmassenmesser, wie beispielsweise aus dem eingangs genannten Stand der Technik bekannt, umfasst.

Das fluide Medium kann beispielsweise ein Gas und/oder eine Flüssigkeit umfassen. Unter der "Hauptströmungsrichtung" ist dabei die lokale Strömungsrichtung des fluiden Mediums am Ort des Sensors bzw. der Sensoranordnung zu verstehen, wobei beispielsweise lokale Unregelmäßigkeiten (zum Beispiel Turbulenzen) unberücksichtigt bleiben können. Insbesondere kann unter der Hauptströmungsrichtung somit die lokale gemittelte Transportrichtung des strömenden fluiden Mediums verstanden werden.

Die Sensoranordnung weist weiterhin mindestens ein quer zur Hauptströmungsrichtung stromaufwärts vor dem Sensor angeordnetes Gitter mit Gitterstreben auf. Diese Gitterstreben können beispielsweise in Form von Stäben mit rundem, ovalem oder vieleckigem Querschnitt ausgestaltet sein. Besonders bevorzugt ist es jedoch, wenn die Gitterstreben eine abgeflachte Form aufweisen, mit einer Schmalseite, welche entgegen der Hauptströmungsrichtung angeordnet ist, und einer Längserstreckung im Wesentlichen in Hauptströmungsrichtung, wobei auch (siehe unten) Anstellwinkel zur Hauptströmungsrichtung möglich sind. Diese Längserstreckung entlang der Hauptströmungsrichtung kann beispielsweise die Dicke des Gitters bestimmen.

Ein Grundgedanke der vorliegenden Erfindung besteht in der Erkenntnis, dass für eine gute Wirkung des Gitters zur Vergleichmäßigung des Geschwindigkeitsprofils eine gleichmäßige Erzeugung von Turbulenzen bis in die Randbereiche des Strömungsrohrs von essentieller Bedeutung ist, um auch dort die Strömung günstig zu beeinflussen. Zu diesem Zweck wird vorgeschlagen, das Gitter mindestens zweiteilig auszugestalten und mindestens einen ersten Gitterbereich und mindestens einen zweiten Gitterbereich vorzusehen. Im Gegensatz beispielsweise zur DE 196 47 081 A1 soll der erste Bereich derart ausgestaltet sein, dass die Gitterstreben in diesem Bereich im Wesentlichen radial verlaufen. Unter "im Wesentlichen radial" soll dabei zu verstehen sein, dass die Gitterstreben in ihrer Haupterstreckungsrichtung im Wesentlichen auf einer durch eine Rohrachse des Strömungsrohrs (welches beispielsweise einen runden und/oder eckigen Querschnitt aufweisen kann) verlaufenden virtuellen Achse liegen sollen. Dabei sind jedoch auch Abweichungen von dieser radialen Ausrichtung möglich und sollen von "im wesentlichen radial" umfasst sein, beispielsweise Abweichungen um bis zu 50°, vorzugsweise nicht mehr als 45° und besonders bevorzugt um nicht mehr als 20°.

Der zweite Gitterbereich soll derart ausgestaltet sein, dass in diesem zweiten Gitterbereich die Gitterstreben im Wesentlichen sekantial verlaufen. Unter "im Wesentlichen sekantial" soll dabei zu verstehen sein, dass die Gitterstreben in diesem Bereich auf Sekanten von um eine Achse des Strömungsrohrs gezogenen virtuellen Kreisen liegen sollen.

Eine derartige Sensoranordnung mit einem Gitter der beschriebenen Art, welches eine Zweiteilung umfasst, ermöglicht es, gezielt in bestimmten Bereichen, welche sich in der Praxis als problematisch bezüglich der Strömung erweisen, eine verbesserte Durchmischung zu bewirken. Dadurch kann beispielsweise im Bereich der Wandgrenzschicht im Strömungsrohr eine stets zuverlässige Durchmischung erzielt werden, und die Strömung kann dadurch beispielsweise in allen Betriebsbedingungen turbulent gehalten werden. Dies bewirkt eine stabilere Strömung im Nachlauf des Gitters und somit eine erhöhte Reproduzierbarkeit der Kennlinien der Sensoranordnung. Ein ansonsten gegebenenfalls erforderliches zusätzliches Drahtgitter kann entfallen, was verringerte Herstellungskosten der Sensoranordnung bedingt. Weiterhin kann durch die stabilisierte Strömung ein Signalrauschen eines Signals der Sensoranordnung erheblich reduziert werden.

Der erste Bereich umgibt den zweiten Bereich ringförmig.

Dadurch lässt sich gezielt im Randbereich des Gitters, welches beispielsweise insgesamt rund ausgestaltet sein kann, der beschriebene Durchmischungseffekt erzielen, indem sich die Wandgrenzschicht im Strömungsrohr zuverlässig durchmischen lässt. Der zweite Bereich kann beispielsweise im Wesentlichen eine Kreisform aufweisen, wobei der erste Bereich beispielsweise im Wesentlichen eine Kreisringform aufweist. Auch von der Kreisform abweichende Querschnitte, beispielsweise ovale oder polygonale Strukturen, sind jedoch möglich.

Wie oben beschrieben, ist für die Form der Gitterstreben besonders eine flache Ausgestaltung bevorzugt. So kann beispielsweise in einer bevorzugten Ausgestaltung der Sensoranordnung eine Form der Gitterstreben gewählt werden, bei welchem diese in dem zweiten Bereich Strebenflächen mit im Wesentlichen paralleler Orientierung zur Hauptströmungsrichtung aufweisen, wie dies beispielsweise in DE 196 47 081 A1 der Fall ist. Unter "im Wesentlichen parallel" kann dabei eine Orientierung verstanden werden, welche parallel zur Hauptströmungsrichtung ist. Auch leichte Abweichungen von dieser Parallelität sind jedoch denkbar, beispielsweise Abweichungen von nicht mehr als 20°, vorzugsweise nicht mehr als 5°. Im Gegensatz zum zweiten Bereich werden im ersten Bereich neben Strebenflächen, welche im Wesentlichen parallel zur Hauptströmungsrichtung orientiert sind, auch Strebenflächen eingesetzt, welche eine Orientierung aufweisen, die dem strömenden fluiden Medium eine Geschwindigkeitskomponente senkrecht zur Hauptströmungsrichtung verleihen. Dies kann beispielsweise dadurch erfolgen, dass die Gitterstreben zumindest in dem ersten Bereich jeweils in einer Schnittebene parallel zur Hauptströmungsrichtung einen Anstellwinkel zur Hauptströmungsrichtung aufweisen. Ein derartiger Anstellwinkel bewirkt, dass dem strömenden fluiden Medium beim Anströmen des Gitters eine Geschwindigkeitskomponente senkrecht zur Hauptströmungsrichtung verliehen wird. Dieser Anstellwinkel kann beispielsweise im Bereich zwischen 5° und 60° und besonders bevorzugt im Bereich zwischen 10° und 40° liegen. Auch andere Anstellwinkel sind jedoch denkbar. Durch die derart erzeugte Drehbewegung des fluiden Mediums im Außenbereich hinter dem ersten Bereich des Gitters kann beispielsweise zwischen Innen- und Außenbereich eine extrem instabile Scherschicht entstehen, die in der Regel sofort zu Turbulenzen führt. Dadurch wird die Wandgrenzschicht turbulent, und es setzt ein verstärkter Impulsaustausch zwischen langsamem fuidem Medium in Wandnähe und schnellem fluidem Medium in der Rohrmitte des Strömungsrohrs ein. Die Drehrichtung des Gitters ist zunächst beliebig, der gewünschte Effekt kann durch rechts- oder durch linksdrehende Gitter erzeugt werden.

Der Anstellwinkel kann innerhalb des ersten Bereichs für die Gitterstreben variieren. Besonders bevorzugt ist es jedoch, wenn der Anstellwinkel für alle Streben in diesem ersten Bereich im Wesentlichen gleich ist (wobei wiederum Toleranzen möglich sind, beispielsweise Toleranzen von nicht mehr als 5°). Eine derartige gleichförmige Ausgestaltung des Anstellwinkels aller Gitterstreben im ersten Bereich bewirkt, aufgrund der radialen Anordnung dieser Gitterstreben, dass dem strömenden fluiden Medium im Bereich hinter dem ersten Bereich des Gitters ein Drall verliehen wird. Bei einer ringförmigen Anordnung des ersten Bereichs des Gitters um den zweiten Bereich herum kann beispielsweise der erste Bereich im Wesentlichen eine gleichförmige rechtsdrehende oder linksdrehende Eigenschaft aufweisen, um dem strömenden fluiden Medium einen Rechtsdrall (das heißt eine Drehung im Uhrzeigersinn bei Bewegung in Hauptströmungsrichtung) oder einen Linksdrall (das heißt eine Drehung im Gegenuhrzeigersinn bei Bewegung in Hauptströmungsrichtung) zu verleihen. Durch diese gezielte Herbeiführung eines Dralls im Randbereich des Strömungsrohrs, nicht hingegen im zentralen Bereich des Strömungsrohrs, wird in diesem Randbereich die Durchmischung weiter begünstigt.

Die Gitterstreben in dem zweiten Bereich können eine oder mehrere Arten von Gitterstreben umfassen. So können beispielsweise sämtliche Gitterstreben in diesem Bereich parallel orientiert sein. Besonders bevorzugt ist es jedoch, ähnlich beispielsweise zur DE 196 47 081 A1, wenn die Gitterstreben in diesem zweiten Bereich mehrere Arten von einander kreuzenden Gitterstreben bilden. Beispielsweise kann eine erste Art von Gitterstreben in einer ersten Richtung orientiert sein, und eine zweite Art von Gitterstreben in einer zweiten, von der ersten Richtung verschiedenen Richtung. Auf diese Weise wird bewirkt, dass sich die Gitterstreben kreuzen und ein Maschengitter bilden. Besonders bevorzugt ist es dabei, da auf diese Weise Vorzugsrichtungen vermieden werden, wenn das Maschengitter ein orthogonales Maschengitter ist, beispielsweise ein Maschengitter mit einer Maschenweite (Kantenlänge der Öffnungen) zwischen 3 und 7 mm und einer Maschentiefe von beispielsweise 5 bis 10 mm.

Der Sensor kann in der Sensoranordnung fest installiert sein und kann beispielsweise einen Messfinger umfassen, welcher in das strömende fluide Medium hineinragt. Alternativ oder zusätzlich kann der Sensor jedoch auch austauschbar ausgestaltet sein, beispielsweise in Form eines Steckfühlers, welcher in das strömende fluide Medium eingesteckt wird. Dementsprechend kann die Sensoranordnung auch als Einheit ohne Sensor hergestellt und/oder vertrieben werden. Eine derartige Einheit wird im Folgenden als Strömungsrohrsegment bezeichnet. Ein derartiges Strömungsrohrsegment für den Einsatz in einer Sensoranordnung gemäß einer oder mehreren der obigen Ausführungsbeispiele kann insbesondere mindestens ein Gehäuse mit mindestens einer Aufnahme zum Einbringen eines Sensors zur Bestimmung des wenigstens einen Parameters in dem strömenden fluiden Medium umfassen. Beispielsweise kann diese Aufnahme eine Öffnung in dem Gehäuse umfassen, durch welche ein Messfinger des Sensors in das strömende fluide Medium eingesteckt werden kann. Auch ein Stutzen, ein Flansch oder ähnliche Arten von Befestigungselementen zur Aufnahme des Sensors können vorgesehen sein.

Weiterhin umfasst das Strömungsrohrsegment das mindestens eine Gitter in einer der oben beschriebenen Ausführungsformen, also mit mindestens einem ersten Gitterbereich mit radialer Strebenanordnung und mindestens einem zweiten Gitterbereich mit sekantialer Anordnung der Gitterstreben.

### Kurze Beschreibung der Zeichnungen

Ausführungsbeispiele der Erfindung sind in den Zeichnungen dargestellt und in der nachfolgenden Beschreibung näher erläutert. Es zeigen
Figuren 1 und 2 verschiedene perspektivische Darstellungen eines Ausführungsbeispiels einer dem Stand der Technik entsprechenden Sensoranordnung;
Figur 3 ein Ausführungsbeispiel einer nicht erfindungsgemäßen Ausgestaltung eines Gitters in Draufsicht;
Figur 4 eine Schnittdarstellung eines Ausschnitts eines Gitters mit Anstellwinkel; und
Figur 5 ein Gitter mit Anstellwinkel in Draufsicht.

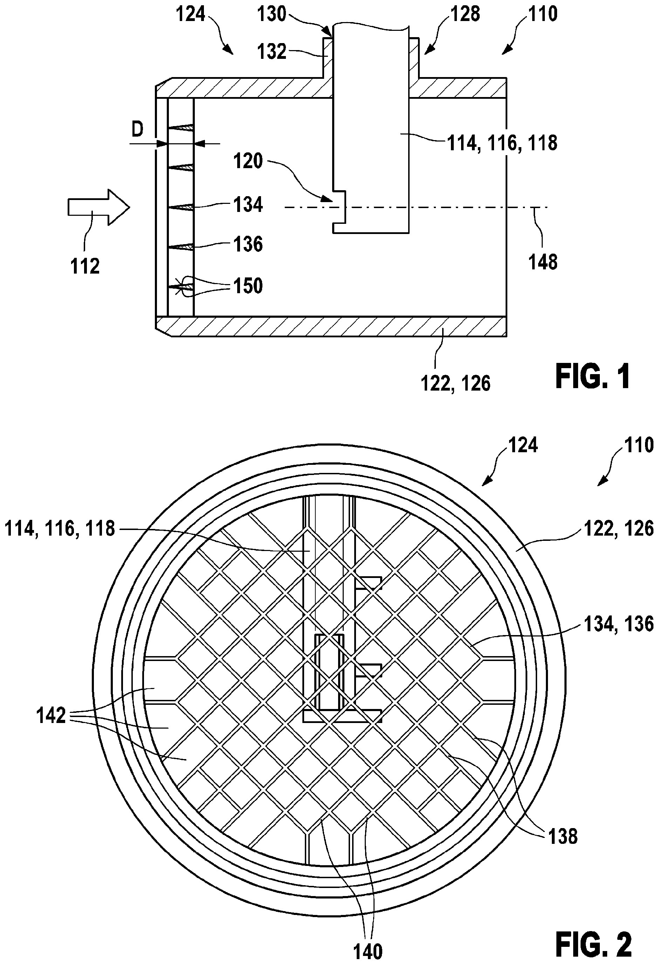

In den Figuren 1 und 2 ist in verschiedenen Darstellungen ein Ausführungsbeispiel einer aus dem Stand der Technik bekannten Sensoranordnung 110 schematisch dargestellt. Dabei zeigt

Figur 1 eine Schnittdarstellung in einer Schnittebene parallel zu einer Hauptströmungsrichtung 112 eines strömenden fluiden Mediums, und Figur 2 zeigt eine Draufsicht auf die Sensoranordnung 110 mit Blickrichtung in Hauptströmungsrichtung 112.

Die Sensoranordnung 110 umfasst einen Sensor 114, welcher in diesem Ausführungsbeispiel als Heißfilmluftmassenmesser 116 ausgestaltet ist. Dieser Heiß filmluftmassenmesser 116 weist einen Messfinger 118 auf, mit einer Einlassöffnung 120, welche in etwa mittig in einem Strömungsrohr 122 der Sensoranordnung 110 angeordnet ist. Für die Ausgestaltung des Heißfilmluftmassenmessers 116 kann beispielsweise auf aus dem Stand der Technik bekannte Ausgestaltungen verwiesen werden, beispielsweise die in DE 196 47 981 A1 gezeigte Anordnung.

Neben dem Sensor 114 weist die Sensoranordnung 110 ein Strömungsrohrsegment 124 auf. Dieses Strömungsrohrsegment 124 umfasst ein Gehäuse 126, welches im Bereich der Sensoranordnung 110 das Strömungsrohr 122 bildet. Zu diesem Zweck kann das Gehäuse 126 beispielsweise mit entsprechenden Anschlussstutzen versehen werden, um beispielsweise in einen Ansaugtrakt einer Brennkraftmaschine eingesetzt zu werden. Weiterhin können Befestigungselemente vorgesehen sein, wie beispielsweise Flansche, Nuten, Vorsprünge etc., wie sie dem Fachmann aus dem Stand der Technik bekannt sind.

Das Gehäuse 126 umfasst weiterhin eine Aufnahme 128 für den Sensor 114. Diese Aufnahme 128 umfasst eine Öffnung 130 sowie einen Ansatz 132. Öffnung 130 und Ansatz 132 sind derart dimensioniert, dass der Messfinger 118 des Sensors 114 in die Öffnung 130 im Wesentlichen passgenau eingeschoben und an dem Ansatz 132 fixiert werden kann.

Weiterhin umfasst das Strömungsrohrsegment 124 der Sensoranordnung 110 ein hinsichtlich der Hauptströmungsrichtung 112 stromaufwärts der Einlassöffnung 120 angeordnetes Gitter 134. Dieses Gitter 134 ist im Wesentlichen quer zur Hauptströmungsrichtung 112 angeordnet, vorzugsweise senkrecht zu dieser Hauptströmungsrichtung 112, wobei jedoch auch Abweichungen von dieser Orthogonalität möglich sind. Das Gitter 134 weist eine Dicke D in Hauptströmungsrichtung auf, welche üblicherweise zwischen 5 und 10 mm liegt. Weiterhin weist das Gitter 134 eine Vielzahl von Gitterstreben 136 auf, welche im Querschnitt eine flache Form aufweisen, so dass ihre Schmalseite der Hauptströmungsrichtung 112 entgegenweist. Wie in Figur 1 zu erkennen, kann der Querschnitt der Gitterstreben 136 beispielsweise eine leichte Keilform aufweisen. Daneben sind auch andere Formen möglich, beispielsweise Tragflächenformen, rechteckige Formen, ovale Formen oder ähnliche Formen.

Aus der Draufsicht in Figur 2 ist erkennbar, dass das Gitter in diesem Ausführungsbeispiel, welches beispielsweise einem kommerziellen Heißfilmluftmassenmesser vom Typ "HFM7" der Robert Bosch GmbH entspricht, als orthogonales Maschengitter ausgestaltet ist. Dies bedeutet, dass eine erste Art 138 von Gitterstreben 136 im Wesentlichen parallel zueinander angeordnet sind und senkrecht angeordnet sind zu einer zweiten, untereinander wiederum ebenfalls parallel angeordneten Art 140 von Gitterstreben 136. Das sich dadurch bildende Maschengitter weist eine Maschenweite (Kantenlänge der Rechtecke) von in der Regel 4 bis 7 mm auf. Erfindungsgemäß wurde erkannt, dass Störungen der Strömungseigenschaften der Sensoranordnung 110 gemäß den Figuren 1 und 2 insbesondere dadurch entstehen, dass im Randbereich des Gitters 134 Unregelmäßigkeiten in der Gitterstruktur des Gitters 140 auftreten. Diese Unregelmäßigkeiten sind in Figur 2 mit der Bezugsziffer 142 bezeichnet und bestehen insbesondere darin, dass in diesem Bereich aus fertigungstechnischen Gründen eine größere Maschenweite auftritt als in der Mitte des Strömungsrohrs 122.

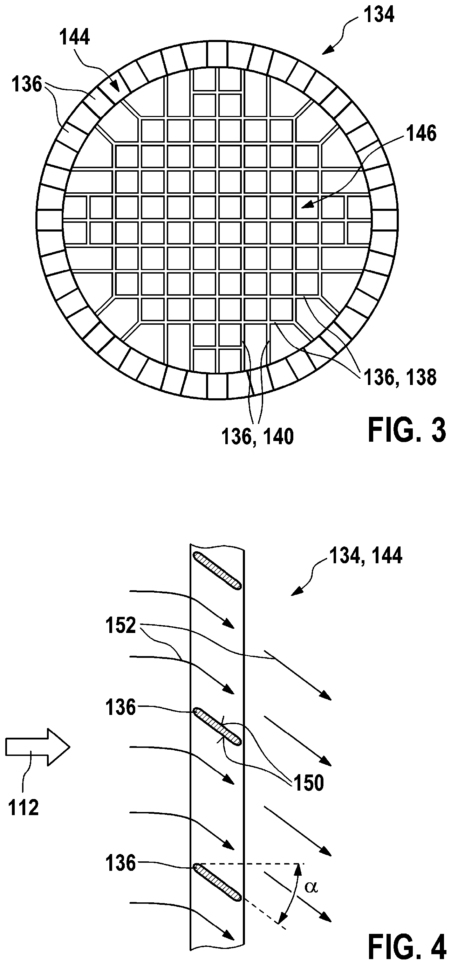

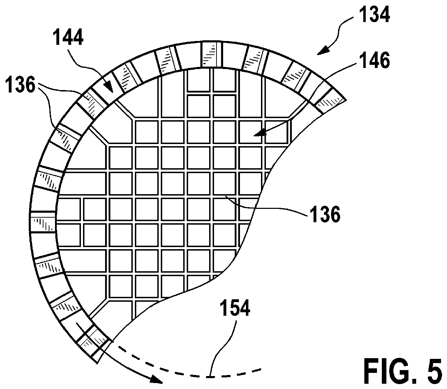

In Figur 3 ist eine nicht erfindungsgemäße eines Gitters 134 dargestellt. In den Figuren 4 und 5 sind hingegen erfindungsgemäße Ausgestaltungen des Gitters 134 dargestellt, mittels derer sich beispielsweise die in den Figuren 1 und 2 dargestellte Sensoranordnung 110 erfindungsgemäß modifizieren lässt.

Ein nicht erfindungsgemäßes Gitter 134 ist in Figur 3 in Draufsicht mit Blickrichtung in Hauptströmungsrichtung 112 dargestellt. Dabei ist zu erkennen, dass das Gitter 134, wie auch im Falle der Figur 2, als rundes Gitter ausgestaltet ist, was jedoch nicht zwingend erforderlich ist. Das Gitter 134 weist einen ersten Gitterbereich 144 auf, welcher als Kreisring einen zweiten Gitterbereich 146, der als zentraler, um eine Sensorachse 146 (siehe Figur 1) angeordneter Bereich ausgestaltet ist.

Der zweite Gitterbereich 146 ist dabei wiederum als Maschengitter ausgestaltet, beispielsweise analog zum Gitter 134 gemäß Figur 2. Es handelt sich wiederum um ein orthogonales Maschengitter.

Um diesen zweiten Gitterbereich 146 herum ist kreisringförmig der erste Gitterbereich 144 angeordnet, in welchem die Gitterstreben 136 radial angeordnet sind. Beispielsweise können diese Gitterstreben 136 in radialer Anordnung derart positioniert sein, dass diese gleichmäßig entlang des Umfangs verteilt sind. Alternativ können diese radialen Gitterstreben 136 im ersten Bereich 144 auch derart positioniert sein, dass diese unmittelbar an Unregelmäßigkeiten 142 im Randbereich des zweiten Gitterbereichs 146 angrenzen. Auch andere Anordnungen der radialen Gitterstreben 136 im ersten Bereich 144 sind denkbar.

Die Gitterstreben 136 im ersten Gitterbereich 144 können beispielsweise mit gleicher Dicke ausgestaltet sein wie die Gitterstreben 136 im zweiten Gitterbereich 146. Alternativ ist jedoch auch eine andere Ausgestaltung dieser Gitterstreben 136 hinsichtlich ihrer Abmessungen und/oder ihrer Form und/oder ihrer sonstigen Beschaffenheit möglich. Allgemein ist im zweiten Gitterbereich 146 eine Maschenweite zwischen 3 und 7 mm und eine Dicke D des Gitters 134 (vgl. Figur 1) von ca. 5 bis 10 mm bevorzugt. Auch andere Dimensionierungen sind jedoch denkbar.

Bei den in den Figuren 1 und 3 dargestellten Ausführungsformen der Gitter 134 verlaufen die Gitterstreben 136 mit ihren Strebenflächen 150 im Wesentlichen parallel zur Hauptströmungsrichtung 112. Erfindungsgemäß ist dies nicht der Fall. Zwar ist es bevorzugt, wenn die Strebenflächen 150 nach wie vor im zweiten Gitterbereich 146 derart parallel zur Hauptströmungsrichtung 112 verlaufen. Im ersten Gitterbereich 144 liegt jedoch eine Orientierung unter einem Anstellwinkel α zwischen Strebenflächen 150 und Hauptströmungsrichtung 112 vor.

Ein erfindungsgemäßes Ausführungsbeispiel eines Gitters 134 mit einem derartigen Anstellwinkel ist in den Figuren 4 und 5 schematisch dargestellt. Dabei zeigt Figur 4 eine Abwicklung des ersten Gitterbereichs 144 in Schnittdarstellung, wohingegen Figur 5 eine Draufsicht analog zur Darstellung in Figur 3 zeigt.

Wie aus Figur 4 erkennbar ist, bewirkt der Anstellwinkel α zwischen Hauptströmungsrichtung 112 und den Strebenflächen 150, dass das strömende fluide Medium, dessen Strömungslinien in Figur 4 symbolisch mit der Bezugsziffer 152 bezeichnet sind, eine Geschwindigkeitskomponente senkrecht zur Hauptströmungsrichtung 112 erhält. Insofern wirken die Gitterstreben des ersten Gitterbereichs 144 ähnlich wie Propellerwinkel.

Wenn alle Gitterstreben 136 des ersten Gitterbereichs 144 den gleichen Anstellwinkel α erhalten, so wird das strömende fluide Medium im Bereich hinter dem ersten Gitterbereich 144, also im Randbereich des Strömungsrohrs 122, in eine Drehbewegung versetzt. Je nachdem ob sich das fluide Medium in Blickrichtung in Hauptströmungsrichtung 112 im Gegenuhrzeigersinn oder im Uhrzeigersinn bewegt, kann von einer "linksdrehenden" oder "rechtsdrehenden" Eigenschaft des ersten Gitterbereichs 144 gesprochen werden. Durch die Drehbewegung des fluiden Mediums im Außenbereich entsteht zwischen Innenbereich und Außenbereich des fluiden Mediums eine extrem instabile Scherschicht, die unmittelbar zu einer Turbulenz führt. Dies ist in Figur 5 anhand eines linksdrehenden Gitters 134 dargestellt. Die Gitterstreben 136 sind dabei mit einem Anstellwinkel α zur Hauptströmungsrichtung 112 orientiert, beispielsweise analog zu Figur 4. Die Anstellwinkel sind dabei für alle Gitterstreben 136 gleich, so dass beispielsweise eine Gitterstrebe auf einer 9-Uhr-Position in Figur 5 bei Blickrichtung in Hauptströmungsrichtung 112 nach unten geneigt ist, wohingegen eine Gitterstrebe auf 3-Uhr-Position in Figur 5 nach oben geneigt ist. Entsprechend handelt es sich bei diesem Ausführungsbeispiel gemäß Figur 5 um ein linksdrehendes Gitter. Diese linksdrehende Gitter erteilt der Wandgrenzschicht einen Drehimpuls.

Die Scherschicht zwischen dem fluiden Medium hinter dem ersten Gitterbereich 144 und dem zweiten Gitterbereich 146 ist in Figur 5 symbolisch mit der Bezugsziffer 154 bezeichnet. Diese Scherschicht 154, welche sofort zu Turbulenzen führt, bewirkt, dass die Wandgrenzschicht ebenfalls turbulent wird und dass ein verstärkter Impulsaustausch zwischen fluidem Medium in Wandnähe und schnellem fluidem Medium in der Rohrmitte entsteht. Auch Gitter 134 mit einer entgegengesetzten Drehrichtung sind jedoch selbstverständlich möglich.

## Patentansprüche

1. Sensoranordnung (110) zur Bestimmung wenigstens eines Parameters eines mit einer Hauptströmungsrichtung (112) strömenden fluiden Mediums, insbesondere einer durch ein Strömungsrohr (122) strömenden Ansaugluftmasse einer Brennkraftmaschine, wobei die Sensoranordnung (110) mindestens einen in dem fluiden Medium angeordneten Sensor (114) zur Bestimmung des Parameters des fluiden Mediums aufweist, wobei die Sensoranordnung (110) weiterhin mindestens ein quer zur Hauptströmungsrichtung (112) stromaufwärts vor dem Sensor (114) angeordnetes Gitter (134) mit Gitterstreben (136) umfasst, wobei das Gitter (134) mindestens einen ersten Gitterbereich (144) und mindestens einen zweiten Gitterbereich (146) umfasst, und die Gitterstreben (136) in dem ersten Gitterbereich (144) im Wesentlichen radial verlaufen, wobei die Gitterstreben (136) in dem zweiten Gitterbereich (146) im Wesentlichen sekantial verlaufen, wobei der erste Gitterbereich (144) um den zweiten Gitterbereich (146) herum kreisringförmig angeordnet ist, **dadurch gekennzeichnet, dass** die Gitterstreben (136) in dem zweiten Gitterbereich (146) Strebenflächen mit im Wesentlichen paralleler Orientierung zur Hauptströmungsrichtung (112) aufweisen und die Gitterstreben (136) in dem ersten Gitterbereich (144) Strebenflächen (150) mit einer Orientierung aufweisen, die dem strömenden fluiden Medium eine Geschwindigkeitskomponente senkrecht zur Hauptströmungsrichtung (112) verleihen.

2. Sensoranordnung (110) nach dem vorhergehenden Anspruch, wobei der erste Gitterbereich (144) den zweiten Gitterbereich (146) ringförmig umgibt.

3. Sensoranordnung (110) nach dem vorhergehenden Anspruch, wobei der zweite Gitterbereich (146) im Wesentlichen eine Kreisform aufweist, wobei der erste Gitterbereich (144) im Wesentlichen eine Kreisringform aufweist.

4. Sensoranordnung (110) nach einem der vorhergehenden Ansprüche, wobei die Gitterstreben (136) in dem zweiten Gitterbereich (146) ein Maschengitter mit einander kreuzenden Gitterstreben (136) bilden.

5. Sensoranordnung (110) nach dem vorhergehenden Anspruch, wobei das Maschengitter ein orthogonales Maschengitter ist.

6. Sensoranordnung (110) nach einem der beiden vorhergehenden Ansprüche, wobei das Maschengitter eine Maschenweite zwischen 3 mm und 7 mm aufweist.

7. Sensoranordnung (110) nach einem der vorhergehenden Ansprüche, wobei das Gitter (134) in Hauptströmungsrichtung (112) eine Gittertiefe (D) zwischen 5 mm und 10 mm aufweist.

8. Sensoranordnung (110) nach einem der vorhergehenden Ansprüche, wobei die Gitterstreben (136) zumindest in dem ersten Gitterbereich (144) jeweils in einer Schnittebene parallel zur Hauptströmungsrichtung (112) einen Anstellwinkel (α) zur Hauptströmungsrichtung (112) aufweisen.

9. Sensoranordnung (110) nach dem vorhergehenden Anspruch, wobei der Anstellwinkel (α) zwischen 5° und 60° und besonders bevorzugt zwischen 10° und 40° beträgt.

10. Sensoranordnung (110) nach einem der beiden vorhergehenden Ansprüche, wobei der Anstellwinkel (α) für alle Gitterstreben (136) des ersten Gitterbereichs (144) im Wesentlichen gleich ist, derart, dass das Gitter (134) in dem ersten Gitterbereich (144) im Wesentlichen gleichförmig rechtsdrehende oder linksdrehende Eigenschaften aufweist.

11. Strömungsrohrsegment (124) für den Einsatz in einer Sensoranordnung (110) gemäß einem der vorhergehenden Ansprüche, umfassend mindestens ein Gehäuse (126) mit mindestens einer Aufnahme (128) zum Einbringen eines Sensors (114) zur Bestimmung wenigstens eines Parameters eines mit einer Hauptströmungsrichtung (112) durch das Strömungsrohrsegment (124) strömenden fluiden Mediums, weiterhin umfassend mindestens ein quer zur Hauptströmungsrichtung (112) strömaufwärts vor dem Sensor (114) angeordnetes Gitter (134) mit Gitterstreben (136), wobei das Gitter (134) mindestens einen ersten Gitterbereich (144) und mindestens einen zweiten Gitterbereich (146) umfasst, **dadurch gekennzeichnet, dass** die Gitterstreben (136) in dem ersten Gitterbereich (144) im Wesentlichen radial verlaufen, wobei die Gitterstreben (136) in dem zweiten Gitterbereich (146) im Wesentlichen sekantial verlaufen.

## Claims

1. Sensor arrangement (110) for determining at least one parameter of a fluid medium flowing with a main flow direction (112), in particular an intake air mass of an internal combustion engine flowing through a flow pipe (122), the sensor arrangement (110) having at least one sensor (114) arranged in the fluid medium for determining the parameter of the fluid medium, the sensor arrangement (110) also comprising at least one grid (134) with grid bars (136) arranged transversely relative to the main flow direction (112), upstream before the sensor (114), the grid (134) comprising at least one first grid area (144) and at least one second grid area (146), and the grid bars (136) in the first grid area (144) extending substantially radially, the grid bars (136) in the second grid area (146) extending substantially secantially, the first grid area (144) being arranged in the form of a circular ring around the second grid area (146), **characterized in that** the grid bars (136) in the second grid area (146) have bar surfaces with substantially parallel orientation relative to the main flow direction (112), and the grid bars (136) in the first grid area (144) have bar surfaces (150) with an orientation which imparts to the flowing fluid medium a speed component at right angles to the main flow direction (112).

2. Sensor arrangement (110) according to the preceding claim, wherein the first grid area (144) surrounds the second grid area (146) in the form of a ring.

3. Sensor arrangement (110) according to the preceding claim, wherein the second grid area (146) substantially has a circular form, wherein the first grid area (144) substantially has the form of a circular ring.

4. Sensor arrangement (110) according to one of the preceding claims, wherein the grid bars (136) in the second grid area (146) form a mesh grid with mutually crossing grid bars (136).

5. Sensor arrangement (110) according to the preceding claim, wherein the mesh grid is an orthogonal mesh grid.

6. Sensor arrangement (110) according to one of the two preceding claims, wherein the mesh grid has a mesh size between 3 mm and 7 mm.

7. Sensor arrangement (110) according to one of the preceding claims, wherein the grid (134) has a grid depth (D) between 5 mm and 10 mm in the main flow direction (112).

8. Sensor arrangement (110) according to one of the preceding claims, wherein the grid bars (136), at least in the first grid area (144), each have an angle of attack (α) relative to the main flow direction (112) in a section plane parallel to the main flow direction (112).

9. Sensor arrangement (110) according to the preceding claim, wherein the angle of attack (α) is between 5° and 60° and particularly preferably between 10° and 40°.

10. Sensor arrangement (110) according to one of the two preceding claims, wherein the angle of attack (α) of all the grid bars (136) of the first grid area (144) is substantially equal, in such a way that the grid (134) has substantially uniformly clockwise rotational or anticlockwise rotational properties in the first grid area (144).

11. Flow pipe segment (124) for use in a sensor arrangement (110) according to one of the preceding claims, comprising at least one housing (126) with at least one holder (128) for the introduction of a sensor (114) for determining at least one parameter of a fluid medium flowing through the flow pipe segment (124) with a main flow direction (112), also comprising at least one grid (134) with grid bars (136) arranged transversely relative to the main flow direction (112), upstream before the sensor (114), the grid (134) comprising at least one first grid area (144) and at least one second grid area (146), **characterized in that** the grid bars (136) in the first grid area (144) extend substantially radially, the grid bars (136) in the second grid area (146) extending substantially secantially.

## Revendications

1. Ensemble de capteur (110) destiné à déterminer au moins un paramètre d'un milieu fluide qui s'écoule dans une direction principale d'écoulement (112), en particulier de la masse d'air aspirée s'écoulant dans un tube d'écoulement (122) d'un moteur à combustion interne,
l'ensemble de capteur (110) présentant au moins un capteur (114) disposé dans le milieu fluide et déterminant le paramètre du milieu fluide,
l'ensemble de capteur (110) comportant en outre au moins une grille (134) dotée de barreaux (136) et disposée transversalement par rapport à la direction principale d'écoulement (112) et en amont du capteur (114) dans la direction principale d'écoulement,
la grille (134) présentant au moins une première partie (144) de grille et au moins une deuxième partie (146) de grille et les barreaux (136) de la première partie (144) de la grille s'étendant essentiellement radialement, les barreaux (136) de la deuxième partie (146) de la grille s'étendant essentiellement en succession,
la première partie (144) de la grille étant disposée en anneau circulaire autour de la deuxième partie (146) de la grille,
**caractérisé en ce que**
les barreaux (136) de la deuxième partie (146) de la grille présentent une surface orientée essentiellement en parallèle à la direction principale d'écoulement (112) et les barreaux (136) de la première partie (144) de la grille présentent des surfaces (150) dont l'orientation confère au milieu fluide en écoulement une composante de vitesse perpendiculaire à la direction principale d'écoulement (112).

2. Ensemble de capteur (110) selon la revendication précédente, dans lequel la première partie (144) de la grille entoure la deuxième partie (146) de la grille en forme d'anneau.

3. Ensemble de capteur (110) selon la revendication précédente, dans lequel la deuxième partie (146) de la grille présente essentiellement la forme d'un cercle, la première partie (144) de la grille présentant essentiellement la forme d'un anneau circulaire.

4. Ensemble de capteur (110) selon l'une des revendications précédentes, dans lequel les barreaux (136) de la deuxième partie (146) de la grille forment une maille dans laquelle les barreaux (136) de la grille se croisent mutuellement.

5. Ensemble de capteur (110) selon la revendication précédente, dans lequel la grille de mailles est une grille de mailles orthogonales.

6. Ensemble de capteur (110) selon l'une des deux revendications qui précèdent, dans lequel la grille de mailles présente une maille d'une taille comprise entre 3 mm et 7 mm.

7. Ensemble de capteur (110) selon l'une des revendications précédentes, dans lequel la grille (134) présente dans la direction principale d'écoulement (112) une profondeur (D) comprise entre 5 mm et 10 mm.

8. Ensemble de capteur (110) selon l'une des revendications précédentes, dans lequel les barreaux (136) d'au moins la première partie (144) de la grille présentent tous dans un plan de coupe parallèle à la direction principale d'écoulement (112) un angle de placement (α) par rapport à la direction principale d'écoulement (112).

9. Ensemble de capteur (110) selon la revendication précédente, dans lequel l'angle de placement (α) est compris entre 5° et 60° et de façon particulièrement préférable entre 10° et 40°.

10. Ensemble de capteur (110) selon l'une des deux revendications qui précèdent, dans lequel l'angle de placement (α) de tous les barreaux (136) de la première partie (144) de la grille est essentiellement identique de telle sorte que la grille (134) présente dans la première partie (144) des propriétés de rotation vers la droite ou de rotation vers la gauche essentiellement uniformes.

11. Segment (124) de tube d'écoulement destiné à être utilisé dans un ensemble de capteur (110) selon l'une des revendications précédentes, comportant au moins un boîtier (126) doté d'au moins un logement (128) qui permet de placer un capteur (144) qui sert à déterminer au moins un paramètre d'un milieu fluide qui s'écoule dans le segment tubulaire d'écoulement (124) dans une direction principale d'écoulement (112) et comprenant en outre au moins une grille (134) dotée de barreaux (136) et disposée transversalement par rapport à la direction principale d'écoulement (112) en amont du capteur (114) dans la direction principale d'écoulement, la grille (134) présentant au moins une première partie (144) et au moins une deuxième partie (146),
**caractérisé en ce que**
les barreaux (136) de la première partie (144) de la grille s'étendent essentiellement radialement et **en ce que** les barreaux (136) de la deuxième partie (146) de la grille s'étendent essentiellement en succession.
